# EUROPÄISCHE PATENTANMELDUNG

(11) **EP 0 137 354 A2**
(43) Veröffentlichungstag der Anmeldung: **17.04.1985**
(21) Anmeldenummer: 84111030.7
(22) Anmeldetag: 15.09.1984
(51) Int. Cl.: C03C 17/04, C03B 9/30

(54) **Verfahren zur Herstellung von elektrostatisch beschichteten Glasgegenständen**

(30) Priorität: 06.10.1983 DD 255474; 31.08.1984 DD 266850
(71) Anmelder: VEB Glaskunst Lauscha, DDR-6426 Lauscha (DD)
(72) Erfinder: Kröcher, Gerhard, Dipl.-Ing.-Ok., DDR-1017 Berlin (DD); Musinowski, Klaus, DDR-1156 Berlin (DD); Kulina, Gustav, DDR-6401 Haselbach (DD); Nass, Herbert, Dr. Dipl.-Chem., DDR-6400 Sonneberg (DD)
(74) Vertreter: Hoffmann, Klaus, Dr. rer. nat.

(57) **Zusammenfassung**

@ Die Erfindung betrifft ein Verfahren zur Herstellung von elektrostatisch beschichteten Glasgegenständen durch Aufbringen von trockener pulverförmiger Glasfritte zum Erzielen eines Überzuges.

Der Erfindung liegt die Aufgabe zugrunde, ein Verfahren zur Herstellung von elektrostatisch beschichteten Glasgegenständen mit einer allseitig gleichmäßigen Beschichtung oberhalb des Deformationspunktes des zu beschichtenden Glases zu schaffen, welches die Herstellung von opaken, farbig opaken oder metallisch glänzenden Überzügen ermöglicht.

Diese Aufgabe wird erfindungsgemäß dadurch gelöst, daß der durch einen Glasträger gehalterte und an einem Potential anliegende Glasgegenstand mit einer Temperatur von 973 K bis 1273 K in einer Wolke aus pulverförmiger, elektrostatisch mit einem Gegenpotential aufgeladener Glasfritte eingebracht und darin beschichtet wird, wobei durch anschließendes Feuerepolieren ein Aufschmelzen der pulverförmigen Glasfritte auf den vorgeformten Glasgegenstand erfolgt und daß abschließend der so beschichtete Glasgegenstand fertiggeformt wird.

Die mit der Erfindung erzielten Vorteile bestehen insbesondere darin, daß ein allseitig gleichmäßiger, kratzfester Überzug erzielt wird, der eine gleichartiggleichmäßig bis strukturierte Oberfläche aufweist.

## Beschreibung

Die Erfindung betrifft ein Verfahren zur Herstellung von elektrostatisch beschichteten Glasgegenständen durch Aufbringen von trockener pulverförmiger Glasfritte zum Erzielen eines Überzuges.

Es ist allgemein bekannt, Glaskörper mit farbigen Oberflächenbeschichtungen, speziell Emailles, zu versehen. Dabei erfolgt ein Auftragen der Emaille auf den fertig ausgeformten Glaskörper bei Raumtemperatur und anschließendem Einbrennen. Nachteilig bei diesem Verfahren ist, daß der Arbeitsbereich unterhalb des Deformationspunktes des jeweiligen Glases liegen muß und demzufolge nur niedrigschmelzende Emails zur Anwendung kommen können. Darüber hinaus ist dieses Verfahren sehr energie- und zeitaufwendig.

Gemäß DE-OS 24 23 187 ist es bekannt, zur Beschichtung von Glasgegenständen eine Glasemaille mittels eines elektrostatischen Aufsprühverfahrens für Trockenpulver aufzutragen, um eine sandstrahlähnlich aufgerauhte Glasoberfläche zu erzielen. Dabei besteht die Emaille aus einem Pulvergemisch von Glasfritte und einer hitzebeständigen anorganischen Komponente.

Nachteilig bei diesem Verfahren ist es jedoch, daß fertig ausgeformte Glasgegenstände vorliegen müssen. Diese Glasgegenstände müssen auf eine Erwärmungstemperatur von vorzugsweise 339 K bis 394 K gebracht werden, um diese elektrostatisch beschichten zu können. Eine nachfolgend weitere Erwärmung ist erforderlich, um die Emaille bei beispielsweise 855 K aufzubrennen. Auch dieses Verfahren ist sehr energie- und zeitaufwendig.

Weiterhin ist gemäß DE-OS 23 19 865 ein Verfahren zur Herstellung von Gegenständen aus Glas oder glasähnlichen Werkstoffen bekannt, bei welchem der Überzug aus Glasemaille in Form eines nassen oder trockenen Auftrages auf den Grundwerkstoff im Verlaufe der Abkühlung aus der schmelzförmigen Phase auf den Grundwerkstoff aufgebracht und mit diesem verbunden wird.

Nachteilig bei diesem Verfahren ist jedoch, daß nur Emaille mittels mechanischer Auftragsweise vor der Formgebung aufgebracht wird. Dies bedingt, daß nur ein einmaliger Überzug nach diesem Verfahren aufgebracht werden kann, da bei etwaiger nochmaliger Erwärmung und Überziehen die geometrische Formgebung nicht mehr gewährleistet ist.

Gemäß US-PS 3 238 053 ist es bekannt, auf heißes Glas unmittelbar nach der Formgebung elektrostatisch farbige Glasfritten aufzutragen. Dabei kann die Glasfritte aus ganz unterschiedlichen Glaszusammensetzungen bestehen. Niedrig schmelzende Glasfritten werden dabei als vorteilhaft ange-sehen, weil sie beim Auftreffen auf das heiße Glas sofort aufschmelzen. Gemäß dieser US-PS wird das elektrostatische Auftragen so vorgenommen, daß durch Anwendung von Masken farbige Muster auf dem Glas entstehen.

Nachteilig ist jedoch, daß nur ein flächig begrenzter Auftrag durch die Größe der Maske beziehungsweise des Maskendurchbruches möglich ist und die Maske nicht entfallen kann, da diese als Elektrode zur Aufrechterhaltung des elektrostatischen Feldes dient. Weiterhin ist nicht gesichert, daß die Bodenseite in jedem Fall beschichtet wird. Ebenfalls können höher schmelzendes Glaspulver oder Glasfritte nicht aufgeschmolzen werden, da sonst die Formhaltigkeit des ausgeformten Glaskörpers nicht gewährleistet ist.

Der Erfindung liegt die Aufgabe zugrunde, obengenannte Nachteile zu vermeiden und ein Verfahren zur Herstellung von elektrostatisch beschichteten Glasgegenständen mit einer allseitig gleichmäßigen Beschichtung oberhalb des Deformationspunktes des zu beschichtenden Glases zu schaffen, welches die Herstellung von opaken, farbig opaken oder metallisch glänzenden Überzügen ermöglicht.

Diese Aufgabe wird erfindungsgemäß dadurch gelöst, daß der durch einen Glasträger gehalterte und an einem Potential anliegende vorgeformte Glasgegenstand mit einer Temperatur von 973 K bis 1273 K in eine Wolke aus pulverförmiger, elektrostatisch mit einem Gegenpotential aufgeladener Glasfritte eingebracht und darin beschichtet wird, wobei durch anschließendes Feuerpolieren ein Aufschmelzen der pulverförmigen Glasfritte auf den vorgeformten Glasgegenstand erfolgt und daß abschließend der so beschichtete Glasgegenstand fertiggeformt wird.

Der Aufschmelz- und Anlagerungsprozeß der trockenen pulverförmigen Glasfritte beginnt bereits mit der elektrostatischen Beschichtung. Nach der Beschichtung erfolgt generell ein Feuerpolieren in entsprechend bekannten Öfen; der Aufschmelzvorgang ist nach dem Feuerpolieren beendet.

Die zu wählende Temperatur richtet sich dabei im allgemeinen nach der Schmelzfähigkeit und Viskosität des vorgeformten Glasgegenstandes beziehungsweise der pulverförmigen Glasfritte.

Vorteilhafterweise wird das Beschichten des vorgeformten Glasgegenstandes mit der pulverförmigen Glasfritte sowie das Aufschmelzen durch anschließendes Feuerpolieren mehrmals wiederholt. Bei mehrmaliger Wiederholung des Beschichtungsvorganges werden in Abhängigkeit der Beachichtungedauer, der Temperatur beim Feuerpolieren, der Dauer der Feuerpolierung sowie der Materialbeachaffenheit unterschiedlich ausgebildete Oberflächen erzielt, die von glatten Überzügen bis zu strukturierten Schichten reichen. Die gesamte Schichtdicke aller Überzüge kann nach Beendigung des letzten Beschichtungsvorganges bis 200_{/}üm liegen. Nach Beendigung der letzten Feuerpolierung erfolgt das Fertigformen durch Ausblasen des Glasgegenstandes.

Nach einem weiteren Kennzeichen der Erfindung ist die Zusammensetzung der Glasfritte den Grundkomponenten des zu beschichtenden Glasgegenstandes angenähert.

Es können auch pigmentierte Emaillepulver aufgebracht werden. Die Glasfritten müssen jedoch immer einen Ausdehnungskoeffizienten aufweisen, der den Grundkomponenten des zu beschichtenden Glasgegenstandes angenähert ist.

Im Sinne der Erfindung ist es weiterhin, daß die pulverförmige Glasfritte eine Korngröße von 30/um bis 80 µm aufweist. Das Vermahlen der Glasfritte erfolgt in bekannten Kugelmühlen oder ähnlichen Mahlaggregaten.

Darüber hinaus hat es sich als günstig erwiesen, die pulverförmige Glasfritte mittels einer elektrostatischen Beschichtungsanlage für Trockenpulver mit wechselbarer Polarität bei Spannungen zwischen 30 kV und 100 kV aufzutragen. Diese elektrostatische Beschichtungsanlage kann beispielsweise als Sprüheinrichtung für Pulver ausgebildet sein. Wesentlich für die Durchführung des Verfahrens ist jedoch, daß die pulverförmige Glasfritte beim Beschichten in Form einer möglichst homogenen elektrostatisch aufgeladenen Wolke ausgebildet ist.

Gemäß einem weiteren Merkmal der Erfindung besteht die Glasfritte aus opakem oder farbig opakem Glas. Somit kann eine opake oder farbig opake Oberflächenschicht im Bereich von gleichartig-gleichmäßig bis strukturiert erzielt werden.

Ein weiteres erfinderisches Merkmal ist, daß die eingesetzte Glasfritte aus Farbglas, insbesondere aus manganhaltigem Farbglas besteht. Bei Wiederholung des Besohichtungsvorganges wird die optische Wirkung des metallischen Effektes erhöht.

Nach einem weiteren Kennzeichen der.Erfindung wird das Feuerpolieren des elektrostatisch beschichteten vorgeformten Glasgegenstandes in einer reduzierenden Atmosphäre vorgenommen . Dadurch wird eine gleichartig-gleichmäßige metallisch glänzende Oberflächenschicht ausgebildet.

Es besteht auch die Möglichkeit der subtraktiven Farbmischung durch Mehrschichtenüberzüge.

Die mit der Erfindung erzielten Vorteile bestehen insbesondere darin, daß ein kratzfester Überzug mit gleichartiggleichmäßiger bis strukturierter Oberfläche erzielt wird, welcher einen opaken, farbig opaken oder metallisch glänzenden Charakter aufweist. Außerdem ist eine allseitig gleichmäßige Beschichtung der Glasoberfläche gewährleistet, da die Beschichtung des Glaskörpers oberhalb des Deformationspunktes erfolgt. Das Verfahren eignet sich besonders zum Aufbringen von Oberflächenschichten auf Gebrauchs-und/oder kunstgewerbliche Glasgegenstände oder Beleuchtungsglas.

Die Erfindung soll nachstehend an drei Ausführungsbeispielen dargestellt werden.

### Beispiel 1

Die zur Beschichtung verwendeten Glasfritten bestehen aus Farbglas. Die Fritten sind in ihren physikalischen Merkmalen, denen des zu beschichtenden Grundglases angeglichen.

Nach dem Abfritten des Farbglases wird dieses im trockenen Zustand auf eine Korngröße von 30 bis 100 ^{p}m gemahlen. Die Herstellung der vorgeformten Glasgegenstände erfolgt nach dem bekannten "Külbel-Verfahren". Dabei wird der Külbel mehrmals überstochen, wobei nach jedem Überstechen eine Zwischenformung durch Wulgern und Blasen notwendig ist. Das Beschichten des vorgeformten Glasgegenstandes erfolgt mittels einer elektrostatischen Beschichtungsanlage für Trockenpulver mit wechselbarer Polarität bei 30 kV bis 100 kV entsprechend den physikalischen Merkmalen der zu beschichtenden Glasgegenstände und pulverförmigen Glasfritten unmittelbar nach der Zwischenformung bei 973 K bis 1273 K. Nach der Beschichtung wird der Glasgegenstand feuerpoliert.

Der Beschichtungs- und Feuerpolierungsvorgang wird zweckmäßigerweise dabei zweimal wiederholt, so daß eine allseitig gleichmäßige Schichtbildung erfolgen kann. Anschließend wird der vorgeformte Glaskörper in eine entsprechende Form eingeblasen und abschließend der bekannten thermischen Nachbehandlung unterzogen.

### Beispiel 2

Zur Herstellung von opak beziehungsweise farbig opak beschichteten Glasgegenständen wird Glasfritte aus opakem beziehungsweise farbig opakem Glas verwendet. Als Trübungskomponente werden die bekannten Trübstoffe, beispielsweise Fluoride, verwendet. Die Färbung wird durch bekannte Metalloxide erzielt.

Nach dem Fritten des Glases wird dieses im trockenen Zustand auf eine Korngröße von 30 pm bis 90µm gemahlen. Der vorgeformte Glasgegenstand wird einerseits nach dem bekannten Külbelverfahren hergestellt. Dabei wird der Külbel mehrmals überstochen, wobei nach jedem Überstechen eine Zwischenformung durch Wulgern oder Blasen notwendig ist. Andererseits können auch vorgeformte Glasposten eingesetzt werden.

Das Beschichten des vorgeformten Glasgegenstandes erfolgt dadurch, daß der durch den Glasträger gehalterte und an dem Potential anliegende Glasgegenstand mit einer Temperatur von 973 K bis 1273 K in eine Wolke aus pulverförmiger, elektrostatisch mit dem Gegenpotential aufgeladener Glasfritte eingebracht und darin beschichtet wird, wobei durch anschließendes Feuerpolieren das Aufschmelzen der pulverförmigen Glasfritte auf den vorgeformten Glasgegenstand erfolgt und daß abschließend der so beschichtete Glasgegenstand fertiggeformt wird. Veränderungen der Atmosphärenzusammensetzung im Feuerpolierungsaggregat bewirken Farbnuancierungen.

### Beispiel 3

Zur Herstellung der Beschichtung von metallisch glänzenden Glasgegenständen wird Glasfritte aus Farbglas, insbesondere aus manganhaltigem Farbglas verwendet. Nach dem Fritten des Glases wird dieses im trockenen Zustand auf eine Korngröße von 30_{/}Um bis 90/um nach bekannten Verfahren zerkleinert. Die Herstellung des vorgeformten Glasgegenstandes erfolgt einerseits nach dem bekannten Külbelverfahren. Dabei wird der Külbel mehrfach überstochen, wobei nach jedem Überstechen eine Zwischenformung durch Wulgern oder Blasen erforderlich ist. Andererseits können auch vorgeformte Glasposten eingesetzt werden.

Das Beschichten des vorgeformten Glasgegenstandes erfolgt dadurch, daß der durch den Glasträger/und an dem Potential anliegende Glasgegenstand mit einer Temperatur von 973 K bis 1273 K in eine Wolke aus pulverförmiger, elektrostatisch mit dem Gegenpotential aufgeladener Glasfritte eingebracht und darin beschichtet wird, wobei durch anschließendes Feuerpolieren in reduzierender Atmosphäre das Aufschmelzen der pulverförmigen Glasfritte auf den vorgeformten Glasgegenstand erfolgt und somit der Effekt der Ausbildung einer metallischen Schicht auftritt. Abschließend wird der so beschichtete Glasgegenstand fertiggeformt.

Die nach diesem Verfahren auf den Glaskörper aufgebrachte Glasschicht ist kratzfest.

## Patentansprüche

1. Verfahren zur Herstellung von elektrostatisch beschichteten Glasgegenständen mittels elektrostatischem Aufbringen von trockener pulverförmiger Glasfritte, dadurch gekennzeichnet, daß der durch einen Glasträger gehalterte und an einem Potential anliegende vorgeformte Glasgegenstand mit einer Temperatur von 973 K bis 1273 K in eine Wolke aus pulverförmiger, elektrostatisch mit einem Gegenpotential aufgeladener Glasfritte eingebracht und darin beschichtet wird, wobei durch anschließendes Feuerpolieren ein Aufschmelzen der pulverförmigen Glasfritte auf den vorgeformten Glasgegenstand erfolgt und daß abschließend der so beschichtete Glasgegenstand fertiggeformt wird.

2. Verfahren nach Anspruch 1, dadurch gekennzeichnet, daß das Beschichten des vorgeformten Glasgegenstandes mit der pulverförmigen Glasfritte sowie das Aufschmelzen durch anschließendes Feuerpolieren mehrmals wiederholt wird und eine Schichtdicke von 50 µm bis 200/um erzielbar ist.

3. Verfahren nach Anspruch 1 und 2, dadurch gekennzeichnet, daß die Zusammensetzung der Glasfritte den Grundkomponenten des zu beschichtenden Glasgegenstandes angenähert ist.

4. Verfahren nach Anspruch 1 bis 3, dadurch gekennzeichnet, daß die Glasfritte eine Korngröße von 30 µm bis 90 µm aufweist.

5. Verfahren nach Anspruch 1 bis 4, dadurch gekennzeichnet, daß die pulverförmige Glasfritte mittels einer elektrostatischen Beschichtungsanlage für Trockenpulver mit wechselbarer Polarität bei Spannungen von 30 kV bis 100 kV aufgetragen wird.

6. Verfahren nach Anspruch 1 bis 5, dadurch gekennzeichnet, daß die verwendete Glasfritte aus opakem oder farbig opakem Glas besteht.

7. Verfahren nach Anspruch 1 bis 6, dadurch gekennzeichnet, daß die eingesetzte Glasfritte aus Farbglas, insbesondere aus manganhaltigem Farbglas besteht.

8. Verfahren nach Anspruch 1 bis 7, dadurch gekennzeichnet, daß das Feuerpolieren der elektrostatisch beschichteten Glasgegenstände in einer reduzierenden Atmosphäre vorgenommen wird.
